# EUROPEAN PATENT APPLICATION

(11) **EP 4 756 514 A2**
(43) Date of publication of application: **10.06.2026**
(21) Application number: 25218867.7
(22) Date of filing: 26.11.2025
(51) Int. Cl.: G02B 27/01

(54) **EYEWEAR DISPLAY SYSTEM FOR DISPLAYING A VIRTUAL IMAGE IN A USER'S FIELD OF VIEW USING INVISIBLE MICRO-MIRROR ELEMENTS**

(30) Priority: 09.12.2024 WO PCT/IB2024/062381
(71) Applicant: Gixel GmbH, 76228 Kalrsruhe (DE)
(72) Inventor: LUO, Ding, 76228 Karlsruhe (DE); TAPHANEL, Miro, 76228 Karlsruhe (DE)
(74) Representative: Hernandez, Yorck

(57) **Abstract**

The disclosure relates to an eyewear display system (1) for displaying a virtual image in a user's field of view, comprising a display unit (14) for emitting light (163", 161", 162") as computer-generated image information in a radiation direction, and a deflection unit (17) for deflecting the light (163", 161", 162") into an eye (10) of the user, with at least one micro-mirror elements (12, 12', 12") which can each be tilted in a carrier structure (200) and which each have a reflection surface (25) for deflecting the light (163", 161", 162") emitted by the display unit (14) as computer-generated image information; wherein the at least one micro-mirror element (12, 12', 12") and the carrier structure (200) are arranged in a sealed housing element (17a) of the deflection unit (17) filled with a liquid (23) in order to provide an eyewear display system (1) with improved immersion.

## Description

This application claims the priority of PCT/IB2024/062381, filed on December 09, 2024, the disclosure of which is hereby incorporated in its entirety by reference.

### Field of the invention

The disclosure relates to an eyewear display system for displaying a virtual image in a user's field of view, comprising a display unit for emitting light as computer-generated image information in an emission direction and a deflection unit for deflecting the light emitted by the display unit as computer-generated image information into the user's eye, with at least one micro-mirror element, each of which can be tilted in a carrier structure, which at least one micro-mirror element has a reflection surface for deflecting the light emitted by the display unit as computer-generated image information.

### Background

Eyewear display systems for displaying a virtual image in a user's field of view, known as "augmented reality glasses" or "AR glasses" for short, are capable of superimposing virtual objects in the form of virtual images onto the user's field of view of the natural environment, thereby virtually supplementing the field of view. By displaying stereo images, these virtual objects can be placed freely in space. For this reason, it is advantageous to enable the largest possible virtually supplementable field of view and a display with high (angular) resolution in order to create an immersive feeling through permanent visibility and spatially consistent positioning of the virtual objects, namely the feeling that the virtual objects are physical objects. The weight of such glasses also contributes to the immersive feeling, which can contribute to an unnatural feeling for the user, especially when moving the head. The so-called vergence-accommodation problem is also a well-known effect that is detrimental to the immersive feeling, or immersion.

The vergence-accommodation problem exists in all 3D displays that display 3D objects using two stereo images. The 3D information, i.e., the distance of the object from the eye, is given by the shifted stereo images. This distance conflicts with the distance at which the eye focuses to see a sharp image. In AR applications, a similar problem arises when virtual 3D objects are integrated into a real 3D environment. If the focus distance of the stereo image does not match the focus distance for the real environment, it is not possible to view both scenes, the real and the virtual, at the same time, even though they are displayed in the same location in the environment.

According to the state of the art, various optical methods are known for mirroring a virtual image into the field of view of the natural environment. However, it is a technically unsolved problem to make the necessary optics small enough to achieve the form factor and weight factor of normal glasses. Glasses that are too large represent a technical limitation on possible applications, as people would not accept a large product on their face in every everyday situation, for example. If the glasses are too heavy, AR glasses can only be worn for a limited time. Examples of possible solutions are described in DE 10 2020 206 392 A1 and DE 10 2023 101 777 A1.

The patent specification US 10 623 707 B2 describes AR glasses with a high-resolution image for the central field of view (fovea centralis) and a lower-resolution image area projected in the peripheral field of view. To achieve this, the direction of gaze is measured using eye-tracking sensor technology and the projection optics are adjusted accordingly.

Publications US 2020 0186761 A1 and US 11 422 274 B2 present AR glasses that allow the focal length of the AR optics to be adjusted to display objects at different distances. This reveals a technical solution to the vergence-accommodation problem. US 2020 0186761 A1 also includes an eye-tracking module to measure the vergence eye parameters. In addition, it is proposed to use these measured values to track the optics to the eye in order to enable eye tracking for different eye positions.

The technical task is therefore to provide an eyewear display system with improved immersion, in particular with minimized weight and the largest possible virtually supplementable field of view, as well as the ability to address problems typical of AR glasses, such as the vergence-accommodation problem and/or the problem of visual acuity correction.

### Overview

This task is solved by the subject matter of the independent claim. Advantageous embodiments are apparent from the dependent claims, the description, and the figures.

One aspect relates to an eyewear display system for displaying a virtual image in a user's field of view, with a display unit for emitting light as computer-generated image information in an emission direction and with a deflection unit for deflecting the light emitted by the display unit as computer-generated image information into the user's eye. The emission direction preferably runs at least substantially in the direction of the user's field of view (forward, so that the light is emitted into the field of view), the deflection unit is arranged at least with the at least one micro-mirror element mentioned below in the user's field of view (in front of the user's eye or eyes) and serves to deflect the light back (to the rear) into the user's eye or eyes.

The deflection unit has at least one micro-mirror element, i.e. one or more, in particular a plurality of tiltable micro-mirror elements, each of the at least one micro-mirror element arranged in a carrier structure, which each of the at least one micro-mirror element have a reflection surface for deflecting the light emitted by the display unit as computer-generated image information into the user's eye. The reflection surface is transparent to ambient light emitted towards the eye from the environment in front of the user in his field of view. The reflection surfaces can therefore be regarded as semi-transparent mirror surfaces. Accordingly, a micro-mirror element can also have several mirror surfaces. This is the case, for example, when the one or more micro-mirror element each have a substrate, in particular a glass substrate, with a coating. One side of the substrate may be coated and an opposite side of the substrate may be uncoated, for example. Accordingly, two reflections may then occur, with one side as one reflection surface and the opposite side as another reflection surface.

The reflection on the coated side can be adjusted (technologically) in the desired manner using a suitable coating (designed for a desired optical effect), while the reflection on the uncoated side is based on Fresnel reflection resulting from the change in refractive index of the substrate and the environment (e.g., the liquid in the housing element mentioned below). In the case of the one or more micro-mirror elements stored in liquid, the latter reflection is typically very low, as typical glasses used as substrates and liquids have very similar refractive indices. Alternatively, the opposite side of the substrate may also have a coating. For example, this may be a counterforce coating, which, in contrast to the coating designed for optical effect, is designed to compensate for stresses that occur between the substrate and its coating on one side and can lead to warping of the substrate. The reflection surface, which is technologically adjusted, can also be located within the volume of the micro-mirror element, so that a total of three reflection surfaces may be present. In this case, two further reflections are then present at the interfaces of the micro-mirror element with the environment (ideally the liquid). The additional reflections may be of a subordinate nature, i.e., significantly weaker than the (main) reflection on the technologically adjusted reflection surface. For example, the additional reflections may be one or more orders of magnitude weaker than the main reflection. It is also possible to coat one side and the opposite side with a coating designed to achieve a desired optical effect. This allows, for example, the (main) reflections on the front and back of the substrate to be technologically adjusted, i.e., their optical properties to be adjusted. Multiple coatings on one side of the substrate are also possible, and the one or more micro-mirror elements can each have a plurality of reflection surfaces.

A plurality of micro-mirrors can be understood here to mean, for example, at least 2 or at least 20 or at least 100 or at least 1,000 micro-mirrors. As is usual for micro-mirrors, the reflection surfaces are small, for example, <100mm² or <20mm. Since the one or more micro-mirrors are mounted movably in the carrier structure, the reflection surfaces can be aligned in two dimensions with their angular alignment. This allows the light emitted by the display unit, the light of the display unit, to be deflected into the eye or pupil even for different orientations and/or positions of the eye. Since the deflection unit is arranged at least partially (i.e., partially or completely), in particular with the one or more micro-mirror elements, in an optical path of the ambient light from the user's field of view into the user's eye, the virtual image corresponding to the computer-generated image information can be superimposed on real objects in the environment in the user's field of view, since the one or more micro-mirror elements (as required for AR glasses) are at least partially transparent to light from the environment (ambient light). For a better immersive feeling with virtual images that are as large and artifact-free as possible, the deflection unit and/or the display unit is controlled depending on the orientation of the eye or eyes, for example with the control unit described below.

Advantageously, all or at least a majority (preferably almost all) of the one or more micro-mirror elements (in particular, always and/or predominantly) are aligned with their angular alignment in such a way that, at least in a standard operating mode of the eyewear display system, only light from the display unit can be directed into the user's eye. In the standard operating mode, this angular alignment can be provided regardless of whether the micro-mirror element(s) are illuminated by the display unit or not. This has the advantage that no light source placed elsewhere causes a visible reflection in the eye. This prevents annoying light reflections that are visible as ghost images. This is particularly advantageous for applications in an outdoor environment, where the sun, as a very bright light source, can otherwise cause unpleasant light reflections. A further advantage resulting from this is that a high reflectance, for example a semi-transparent coating, can be selected for the reflection surfaces of the one or more micro-mirror elements, since even with high reflectance, unwanted light reflections in the eye cannot be amplified.

In addition, a power-saving operating mode of the eyeglass display system can be provided, in which (in particular only) micro-mirror elements not illuminated by the display unit are brought into a predetermined rest position or alignment. In the rest position, an actuator system with the actuator element(s) mentioned below can then be completely or partially deactivated. For example, the one or more micro-mirror elements can be brought into the rest position when no virtual image is displayed or when the virtual image has large/long-lasting black areas. Preferably, the one or more micro-mirror elements are only moved again when they are irradiated by the display unit. The rest position of the one or more micro-mirror elements can be specified in such a way that it corresponds to the rest position of the respective eye. In the rest alignment of the one or more micro-mirror elements, light from the display unit is essentially only directed into the user's eye when the eye is in its rest position. However, then the reflection condition is not met and interference reflections may occur from light that is coupled in from behind. Although unwanted reflections from ambient light may cause visual artifacts under certain circumstances, it has been shown that people predominantly keep their eyes in the aforementioned resting position or neutral gaze position, minimizing the likelihood of artifacts occurring. Overall, it is therefore advantageous to select the rest alignment of the one or more micro-mirror elements in accordance with the resting position of the eye, so that the reflection condition in the exit aperture of the projector is fulfilled most of the time, even when the actuators are switched off.

Alternatively or additionally, a high-quality operating mode can also be provided in which the angular alignment of the one or more micro-mirror elements is continuously adjusted, i.e., the one or more micro-mirror elements are constantly tracked in line with eye movements (e.g., even when no virtual image is displayed or the virtual image has large/long-lasting black areas). It may also be provided that the eyeglass display system has a sensor device (e.g., camera sensor device) which detects and/or evaluates the environment, for example with regard to prevailing lighting conditions, as well as an automatic switching device which is designed to automatically switch back and forth between different operating modes based on one or more predetermined switching criteria. One switching criterion may be, for example, a probability of bright light spots (which can cause easily distracting reflections) evaluated by the sensor device, so that the power-saving mode is activated when the probability is low and the high-quality operating mode is activated when the probability is high. The environment can also be recorded and analyzed in terms of location data; for example, when using the eyewear display system outdoors, bright light spots are more likely to occur than indoors. By specifying an appropriate control scheme, power consumption and immersion can be optimized.

The display unit may have one or more preferably flat screen or display elements ("displays") for generating the light, but may also have one or more (laser) projector elements. In particular, the display unit can be a stereo display unit that is suitable for generating a virtual stereo image in the field of view. For this purpose, the stereo display unit can have two screen elements or two (laser) projector elements, each of which is assigned to one of the user's two eyes. For example, the screen elements or (laser) projector elements can each be arranged on a temple unit of the eyeglass display system on the side of the user. If possible, the light from a light-generating pixel element of the display unit should only fall on one micro-mirror element and not be visible at the same time via one or more adjacent micro-mirror elements. In the latter case, the same pixel information would be perceived in two different spatial directions, i.e., as two different virtual pixels (image points of the virtual image), since adjacent micro-mirror elements are generally tilted at an angle other than zero to each other, i.e., they are aligned differently.

In one embodiment, the display unit may comprise a light-emitting display, in particular a so-called "microdisplay," as well as a microlens array, a so-called "microlens array." The microlens array has a plurality of microlens elements arranged in parallel in the beam path from the light-generating display of the display unit to the exit aperture of the display unit (as opposed to an arrangement in series). Such microlens elements may, for example, have a diameter of less than 1000 µm, preferably less than 500 µm, and/or greater than 50 µm. Preferably, the display unit also has a (in particular achromatic) projector optic with several optical lenses. The projector optics are arranged in the beam path between the microlens array and the exit aperture. In particular, the projector optics are designed to direct light from only one microlens element of the microlens array to a corresponding micro-mirror element. To each microlens element used during operation of the eyewear display system can therefore be assigned exactly one micro-mirror element. The optical imaging realized by the projector optics thus ensures that light leaving a microlens element is only visible or perceptible via exactly one micro-mirror. This has the advantage that no multiplexing (or, when using the adjustable aperture unit described below, only a small amount of multiplexing) is necessary, i.e., all (or, when using the adjustable aperture unit, many of) the one or more micro-mirror elements can display virtual pixels simultaneously. In contrast to a multiplexing approach, lower light intensities of the light-generating pixel elements are therefore sufficient because the pixel elements can be switched on/activated for the entire duration of a single frame and not just for a (very short) fraction of a single frame. Accordingly, less bright display technologies such as organic light-emitting diodes (OLED) can be used.

If the projector optics are achromatic, the associated optical image is achromatic, so that the respective images from the microlens element to the micro-mirror element for the primary colors of the display unit are at least essentially wavelength-independent. The primary colors are typically red, green, and blue. The aim is to technically ensure that the field of view resulting for each micro-mirror element is limited to one micro-lens element only, so that there can be no crosstalk of image content.

Preferably, to each microlens element is assigned its own pixel element area on the light-generating display. Light from the light-generating pixel elements of this pixel element area is only imaged via one microlens element. The microlens elements and the projector optics can be adapted to each other in such a way that, in addition to imaging the plane of the microlens elements onto the plane of the one or more micro-mirror elements, a sharp image of the light-generating pixel elements is also projected into the user's eye or the "eyebox" associated with the position of the eye. The planes can also be curved planes or other two-dimensional manifolds of three-dimensional space. Preferably, the aforementioned adjustment is made under the boundary condition that maximum image sharpness of the virtual image is achieved when the eye is focused centrally on the respective micro-mirror element. In this alignment, the eye views the respective micro-mirror element with its maximum imaging performance. Since the imaging performance of the eye decreases rapidly and sharply towards the sides, the resulting poorer imaging for micro-mirror elements to the side of the central line of sight is not a problem. If the display unit is located in or on a temple of the eyeglass display system, the plane of the microlens elements and the plane of the one or more micro-mirror elements are tilted relative to each other. Accordingly, Scheimpflug optics can be selected for the projector optics. In principle, however, the optics can be adapted to alternative geometric arrangements of the display unit relative to the deflection unit.

In a further embodiment, the micro-lens array is arranged so that it can be moved, in particular shifted, relative to the light-generating display by means of a focus actuator. This is particularly advantageous because the focal length of the micro-lens array is comparatively small, for example less than 2 mm, preferably less than 1 mm. As a result, only a small amount of mobility/displacement of, for example, less than 2 mm, preferably less than 1 mm, is required to improve the virtual image in terms of improved focusing. For example, the focal plane can be quickly shifted when the user's eye jumps from one virtual object to another virtual object. This can alleviate the vergence-accommodation problem, leading to improved immersion.

In another embodiment, not all micro-mirror elements are assigned to a micro-lens element. Thus, there may be more micro-mirror elements than micro-lens elements. Accordingly, the micro-mirror elements that are not assigned to a micro-lens element are then imaged directly onto the light-generating display via the projector optics, or the corresponding pixel element areas of the light-generating display are imaged onto the micro-mirror elements that are not assigned to a micro-lens element. Preferably, the micro-mirror elements not assigned to a micro-lens element are arranged closer to an outer edge of a field of view, i.e., closer to a respective next temple of the eyeglass display system, than the one or more micro-mirror elements that are assigned to a micro-lens element. This is advantageous because in the nose area of the field of view, the angular distance from one micro-mirror element to the next micro-mirror element typically decreases, which increases the risk of unwanted crosstalk from one micro-mirror element to the next adjacent micro-mirror element. This is because the distance between the micro-mirror elements and the display unit is significantly greater in the temple area than in the bridge area. The angular distance is determined by the difference in the tilt angles of adjacent micro-mirror elements.

In a further embodiment, the microlens array is designed to correct and/or compensate for dispersion of the light emitted by the light-generating display. This can be achieved, for example, by means of an additional diffractive structure as part of the microlens array and/or by means of (outer) boundary surfaces (also referred to as interfaces) that are inclined relative to each other. Such mutually inclined boundary surfaces can compensate for dispersion in a manner analogous to the prism effect. This improves the image quality, which leads to improved immersion.

In one embodiment, the one or more micro-mirror elements and the support structure may be arranged in a sealed housing element of the deflection unit filled with a liquid. The housing element may be arranged in front of the user's eyes, similar to the lenses of conventional eyeglasses. Accordingly, the liquid and the one or more micro-mirror elements and the support structure are arranged in an interior space of the housing element in such a way that the one or more micro-mirror elements and the support structure are surrounded by the liquid. The housing element is oil- and/or water-tight and made of or with a material at least substantially transparent to ambient light and the light from the display unit, as is also the case with conventional eyeglass lenses. The one or more micro-mirror elements and the support structure are also advantageously made of a transparent material, as will be explained again below.

The liquid bath of micro-mirror element(s) and support structure has a damping effect, suppressing vibrations and thus unwanted small, rapid changes in the angular alignment of the reflection surfaces. This is advantageous because the eye performs sudden movements of up to 1000° per second and then rests. In addition, the liquid reduces the difference in refractive index at the material transition, i.e., the interface between the liquid and the micro-mirror(s) or support structure. This reduces Fresnel reflections on the one hand and other refraction effects on the other. Both the reduction of reflections and effects reduces the visibility of the elements or structures in the liquid bath, as is known, for example, from glass components immersed in water. This prevents artifacts in the field of view that detract from the user's immersive experience and makes it possible to use the micro-mirror element arrangement with more micro-mirror elements ("micro-mirror array") directly in front of the user's eyes in their field of view. However, the micro-mirror array enables the large-area virtual supplementation of the field of view with greater (angular) resolution for the virtual image and is therefore a prerequisite for an immersive eyewear display system with dimensions similar to those of commercially available eyewear.

In a further embodiment, it is provided that the one or more one or more -mirror elements and/or the support structure and/or other components which are surrounded by the liquid or adjacent to the liquid (such as a side of the housing element facing the interior) are each (at least substantially) transparent, as described above for the housing element. The micro-mirror elements and/or the support structure and/or other components are made of or with a respective transparent material having a first refractive index. In particular, the housing element and/or the one or more micro-mirror elements and/or the support structure and/or the other components can be made of the same material, which facilitates the adaptation of the optical properties to each other.

The liquid is also (at least essentially) transparent for the ambient light and has a second refractive index that is adjusted to the first refractive index in terms of the smallest possible deviation. In particular, the second refractive index (at a defined temperature value, which is preferably within the temperature range specified below) can be equal to the first refractive index for at least one wavelength in a green wavelength range. Accordingly, the liquid should be selected such that the second refractive index does not deviate from the first refractive index by more than a specified limit value of, for example, 0.005 over a specified wavelength range of, for example, 400 nm-700 nm and/or a specified temperature range of, for example, 0°-30°. The liquid can also be optimized for one or more sub-ranges of the respective ranges, for example, it can have a second refractive index that is particularly similar to the first refractive index in the wavelength range of 540 nm +/- 30 nm and/or in the temperature range of 21° +/- 2°. The similarity in the green wavelength range (520 nm-565 nm) is particularly advantageous, as it has been shown that artifacts in the green wavelength range are perceived by humans with a higher resolution than in the red or blue wavelength range. In the subrange, in particular the green wavelength range, a smaller maximum limit value for the deviation can be specified, for example 0.002. Preferably, the refractive index curves of the liquid and the first material plotted over the wavelength intersect in the green wavelength range. Such liquids, known as "refractive index matching liquids," are commercially available with the desired properties. Accordingly, it may be advantageous to actively control the temperature of the one or more micro-mirror elements, i.e., to measure it and set a target temperature or target temperature range by heating or cooling. A temperature control device for the liquid may therefore be provided. The temperature control device may comprise a sensor unit for measuring the temperature of the liquid and a temperature control unit for adjusting the temperature of the liquid to a predetermined temperature value, i.e., depending on the measured value and the predetermined temperature, either for heating or for cooling. In this way, temperature-dependent deviations can be avoided or at least reduced.

This means that the ambient light is refracted so little when passing through the deflection unit that any change in the ambient light is at least in the wavelength range of the ambient light and/or at least in an angle range of the ambient light and/or at least in the temperature range below the user's perception threshold. As a result, the material transitions and thus the one or more micro-mirror elements and/or the carrier structure and/or other components surrounded by the liquid are effectively invisible to the user. This means that the one or more micro-mirror elements can be arranged over a large area in front of the user's eyes without disturbing their perception of the environment and thus the virtual image, which significantly improves the immersive feeling when using the eyewear display system.

In another embodiment, the one or more micro-mirror elements are mechanically coupled to a common actuator element, in particular by means of a two-dimensional guide matrix structure. The guide matrix structure can be mechanically scanned by the carrier structure in order to achieve individual tilts (the angular alignments) of the one or more micro-mirror elements. Alternatively, it may be provided that the one or more micro-mirror elements are each coupled to an individual actuator element. In both cases, the angular alignment of the one or more micro-mirror elements can thus be controlled via the common actuator element or the individual actuator elements in accordance with a stored specification, once in the form of a mechanical guide mechanism and once in the form of, for example, a lookup table. The common or individual actuator elements can be designed to move at least some of the one or more micro-mirror elements, in particular most and/or all of the one or more micro-mirror elements, differently from each other and/or non-linearly. The angular alignments of the reflection surfaces can therefore be specified individually and/or non-linearly, for example by the guide matrix structure and/or an actuator control specification. This individual and/or nonlinear adjustment ensures that the deflected light always reaches the eye, where larger coherent virtual images are also created. The common actuator element reduces the number of components required for the deflection unit that are arranged in the user's field of view. This contributes to the low visibility of the structures in the user's field of view, thereby improving the immersive feeling.

The one or more micro-mirror elements can each be equipped with an individual angle sensor for measuring the respective angular alignment. This enables the target and actual angular alignment of the respective reflection surface to be compared, thereby helping to reduce unwanted shifts of virtual pixels in the virtual image. With such angle sensors, small deviations from the target in the order of 1/120° can be compensated for by means of a corresponding control signal for the actuator element or elements (and thus via software).

In one embodiment, the reflection surfaces are hexagonal reflection surfaces, and in particular, the respective micro-mirror element has a coating on its reflection surface. The reflection surfaces can have a diameter, in particular an overall height and/or width, of at least 1 mm, in particular at least 2 mm, and/or a maximum of 10 mm, in particular a maximum of 4 mm. The hexagonal shape allows a particularly dense arrangement of the micro-mirror elements and a correspondingly flat display of the virtual image in high resolution, which, due to the reduced visibility of the one or more micro-mirror elements and associated components, also results in low artifact levels without reducing the immersive feeling. If polarized light is used for the virtual image, it is advantageous to choose a coating with increased reflection for the polarization used. For example, a reflectance of 20% can be selected. The reflectance can be largely wavelength-independent, i.e., it can deviate by less than 10% (and thus lie between 10% and 30%) over the range of relevant (visible) wavelengths, preferably less than 5% (and thus lie between 15% and 25%). This is because when viewing the natural environment through the partially mirrored reflection surfaces, both polarization states are present in the natural ambient light and the effective transparency of the one or more micro-mirror coating is thus higher. The coating also allows the desired reflection properties to be defined without negatively affecting the visibility of the one or more micro-mirror elements, which would otherwise be affected (for example, by the geometry of the one or more micro-mirror elements).

A coating whose reflection properties are adapted to the emission spectrum of the display unit, in particular to maxima in the emission spectrum, is particularly advantageous. Typically, the display unit has several spectral maxima ("peaks"), generally for red, green, and blue. Accordingly, it is advantageous to select a higher reflectance for the partial wavelength ranges located around these maxima and the lowest possible reflectance in the remaining wavelength ranges, preferably a reflectance of at least essentially zero. The partial wavelength ranges located around the maxima are separated by intermediate wavelength ranges. The partial wavelength ranges around the maxima can, for example, have a width of 40 nm, in particular 30 nm, preferably 20 nm, and particularly preferably 5 nm. This has the advantage that more natural ambient light, which is typically spectrally broader, reaches the eye. In effect, this increases transparency without reducing the efficiency of the system. The maxima can be designed for up to 100% reflectance without significantly reducing the average transmission, e.g., with an average transmission of 90%.

Accordingly, it is particularly advantageous to combine the described higher reflectance with narrow spectral maxima of primary colors of the display unit (such as the aforementioned red, green, and blue). For example, the emission spectrum of the display unit can be selected such that the maxima have a full width half maximum (FWHM) of at most 40 nm, in particular at most 20 nm, preferably at most 10 nm, and especially preferably at most 2 nm . Ideally, the display unit (or the light from the display unit used for the virtual image) has no more than three maxima. In addition to further increased transparency for natural ambient light, this spectral restriction has the advantage that the chromatic correction of the dispersion is significantly simplified because it does not have to be performed for a broad wavelength range, but only for (for example, three) small ranges in the (in particular blue, green, and red) wavelength range.

Thus, when a micro-mirror element is arranged in a medium such as liquid, the light is dispersed due to the wavelength dependence of the change in the refractive index. Light from the display unit strikes the air-liquid interface at an angle, is then reflected by the micro-mirror element, and generally has a new angle. At this new angle, the light re-enters the liquid-air interface and leaves it at a different, third angle. This is known from a dispersion prism, where the wavelengths of light are split. This split must be corrected in the optics of the eyeglass display system. It is particularly advantageous if the spectral range to be corrected is as small as possible, which is why it is particularly desirable that the one or more micro-mirror elements only reflect small spectral peaks or only around small spectral peaks. This allows high system efficiency, high system transparency, and high image quality to be achieved through simplified dispersion correction.

In a further embodiment, it is provided that the reflection surfaces have at least partially different sizes, i.e., different widths and/or different heights. In particular, one or more reflection surfaces that are closer to the user's central axis of vision in a forward-facing neutral position of the eye may have a smaller size than one or more reflection surfaces that are further away from the user's central axis of vision. In order for the virtual image to be visible to the eye, the light from an exit aperture of the display unit must be deflected into the pupil of the eye via the respective micro-mirror element. This results in a relationship between the maximum size of the respective micro-mirror element(s) and the diameter of the exit aperture of the display unit. In an advantageous embodiment, the respective reflection surfaces can be selected to be as close as possible to or equal to the maximum size. The maximum size is smaller near the central axis of vision than far from the central axis of vision. This takes advantage of the fact that there are fewer mirror transitions at which each virtual partial image that can be seen via only one micro-mirror element must connect to the adjacent partial image. This partial image must be calculated for each transition in order to avoid artifacts. A smaller number of micro-mirror elements thus reduces this computational effort. Diffraction effects are also minimized, which occur due to the truncation of the beam when it only partially hits the micro-mirror in the edge area of each micro-mirror element. The design with fewer micro-mirror elements thus minimizes these diffraction artifacts and enables improved display of a virtual image and thus improved immersion.

In a particular advantageous embodiment, the number of micro-mirror elements is reduced to one, i.e. one single micro-mirror element is intended for each eye. Correspondingly, the size of the reflection surface may be greater than described above in this case. Namely, the reflection surface diameter, in particular an overall height and/or width, may be larger than 10mm. The reduction of the number of micro-mirror elements has also the advantage that the alignment of the one micro-mirror element does not need to be coordinated with neighboring micro-mirror elements. Thus, the precision of the micro-mirror alignment only needs to match the requirements to direct the light into the pupil, and not the tighter requirements of minimal deviation from the alignment of neighboring micro-mirror elements. Further, diffraction effects at the borders between neighboring micro-mirror elements are avoided, which results in higher image quality. The optical efficiency is tripled, as overlapping of three neighboring micro-mirror elements requires a threefold optical redundancy. The removed overlapping of neighboring micro-mirror elements also allows simplified optics. Further, manufacturing is simplified, as manufacturing tolerances for neighboring micro-mirror elements do not exist.

In another embodiment, the reflection surfaces are concave reflection surfaces. Alternatively or additionally, the reflection surfaces can be flat reflection surfaces. The concave reflection surfaces enable a particularly high light efficiency. This makes it possible to ensure that the light from only one physical pixel of the display unit is imaged onto a respective micro-mirror and then deflected from there in a targeted manner to the location in the user's eye intended for the virtual image. Accordingly, multiplexing is not necessary in this case. The concave reflection surfaces can also be selected to focus directly on the display unit. This eliminates the need for additional optical elements, but all of the one or more micro-mirror elements simultaneously image the display unit. As a result, a multiplexing method must be used to clearly image pixel information (the light from a physical pixel of the display unit) in one viewing direction.

Plane reflection surfaces are particularly advantageous if an additional focusing unit is provided in the optical path between the display unit and the deflection unit, for example to resolve the vergence-accommodation problem and/or to compensate for the user's visual impairment. The additional focusing unit allows the focus of the virtual image to be adjusted to the position of the current viewing direction at all times. For this purpose, information on the orientation of the eye ("eye tracking") can be used, as described below. Preferably, the focus for the entire virtual image is changed uniformly, for example by using an electrically adjustable liquid-controlled lens ("liquid lens"). However, other optical approaches are also possible, for example by stacking several transparent displays. With flat reflection surfaces, any focus distances of the display unit can be displayed without causing imaging errors - other known beam splitter technologies, such as waveguides, must be designed for a predetermined focus distance.

With the additional focusing unit, in particular the liquid-controlled lens, the user's visual impairment can be dynamically compensated (i.e., individually for different users) regardless of the resolution of the vergence-accommodation problem. In this case, an additional lens element must be placed in the optical path of the ambient light from the field of view to the eye between the environment and the deflection unit. Here, for example, it is conceivable that the user wears their conventional glasses for visual acuity correction over the AR glasses or uses a corresponding attachment. The visual acuity correction can be further refined with additional lens elements between the display unit and the deflection unit.

In one embodiment, the support structure and/or the one or more micro-mirror elements and/or other components surrounded by the liquid are shaped in such a way that the ambient light from the user's field of view passes through the interfaces between the transparent material and the liquid and/or between the liquid and the transparent material at least predominantly, for example from a predetermined sub-area of the field of view, at small angles, in particular at least predominantly at angles of less than 45°. The ambient light should thus strike the aforementioned interfaces at very few points, ideally nowhere, at a very shallow angle and at as many points as possible, ideally everywhere, at a steep angle. Since the ambient light hits the aforementioned interfaces from different areas of the field of view at different angles, particularly important parts can be selected for the specified sub-area, for example, an area surrounding the user's central line of sight. This means that a geometry is selected for the carrier structure and/or one or more micro-mirror elements and/or other components which minimizes perceptible refraction and diffraction effects and thus further reduces the visibility of the aforementioned components, with the aforementioned effects.

In a further embodiment, it is provided that the reflection surfaces of at least some of more than one micro-mirror elements, in particular most of the micro-mirror elements, overlap in an orthogonal projection onto a plane extending transversely to the user's central line of sight. This applies in the case where the micro-mirror elements or the reflection surfaces are oriented parallel (in the case of physical contact: as parallel as possible). With the overlapping micro-mirror elements, diffraction effects can be reduced and resolution increased. Preferably, the micro-mirror elements only overlap in areas in which the micro-mirror elements are tilted sufficiently during intended use (for example, in the area of the angle alignments used, as specified by the actuator element(s)) so that no physical contact can occur during operation. In particular, it may be provided that the reflection surfaces do not overlap in areas in which they are perpendicular to the central viewing axis at least at one point of time during intended use.

It may be provided that the reflection surfaces of the more than one micro-mirror elements overlap in an environment of the central viewing axis of the user in the orthogonal projection. This design is advantageous because, in typical positions of the display unit on the side of a spectacle frame, the micro-mirrors that are visible when looking straight ahead are sufficiently inclined so that overlap is mechanically possible. Towards the side of the temple, there is then an area where no overlap is possible. Thus, due to the overlap and the resulting reduction in diffraction effects, a higher resolution can be achieved in the straight-ahead viewing area, which is advantageous for use in AR glasses. In addition, when looking to the side, people turn their heads in the medium term and combine this with looking along the central axis of vision ("straight ahead") rather than looking sideways with their eyes turned, meaning that the increased resolution in the central axis of vision (the "straight ahead" line of sight) improves immersion.

In one embodiment, the one or more micro-mirror elements are arranged in a one- or two-dimensional curved surface. In addition or alternatively, the support structure and/or the common actuator element may extend along a one- or two-dimensional curved surface. Further, the sealed housing element may extend along a one- or two-dimensional curved surface, as known from standard glasses with curved lenses. The curved surface can be defined as a two-dimensional manifold in three-dimensional space. The one or more micro-mirror elements are thus arranged at least partially offset from each other in the direction of the central viewing axis. This is particularly advantageous in conjunction with the overlapping micro-mirror elements described above, as it allows overlap (with the advantages described) to be achieved in more areas, i.e., for more micro-mirror elements.

In a further embodiment, the housing element has an anti-reflective coating on a side facing the display unit, in particular an anti-reflective coating with locally varying anti-reflective properties. Since the light from the display unit is usually coupled into the deflection unit from the side of the temple and then reflected at the one or more micro-mirror elements, reflection also occurs at the interface between the air and the transparent material of the housing element. Depending on the position of the pupil, this reflection is visible to the eye at different positions and is undesirable, but can be sufficiently reduced by the anti-reflective coating. This also reduces artifacts and thus increases immersion.

In an advantageous variant, the display unit can emit polarized light, in particular linearly polarized light, so that the unwanted reflection can be further reduced by means of the anti-reflective coating matched to it. It is also advantageous to align the polarization direction accordingly for minimal reflection. If the direction of light emission relative to the side of the housing element facing the display unit is chosen as close as possible to the Brewster angle, depending on the overall geometry of the eyeglass display system, unwanted reflections can be almost completely avoided in this way. Anti-reflective coatings are also typically applied to the coating of conventional eyeglass lenses to allow a view of the natural environment. For the eyeglass display system, it is therefore advantageous to choose a coating that allows both low reflection during normal viewing and low reflection of the light emitted by the display unit. Since the reflection of the light emitted by the display unit can only be seen in a small area, locally variable coatings are advantageous, which eliminate the reflection of the light emitted by the display unit in the area of the virtually supplementable field of view and improve transparency in the remaining area.

In one embodiment, the eyeglass display system comprises an eye-tracking device for determining the orientation of the user's eye and a control unit for controlling the deflection unit depending on the result of determining the orientation of the eye. This allows the light to be directed specifically into the pupil of the eye, which increases light efficiency and avoids undesirable effects such as "eye glow," in which third parties see reflections of the deflected light in the user's eye. Due to the improved energy efficiency, the weight of, for example, a battery and the required size of, for example, the display unit can be reduced, which also leads to improved immersion.

It may be provided that the control unit is also designed to control the display unit in accordance with an assignment rule stored in the control unit. The assignment rule may specify an assignment of the respective virtual pixels of the virtual image to a respective physical pixel of the display unit, which changes depending on the orientation of the eye. The content of a virtual pixel is thus specified by different physical pixels for different orientations of the eye (and thus at different times). This is because when the one or more micro-mirror elements move, the assignments of physical pixels of the display unit to virtual pixels of the virtual image are always changed, and in different ways for each pixel combination. This nonlinear change is compensated for by the assignment rule so that the virtual pixels within the virtual image maintain their desired position. This improves image quality and enables particularly large virtual images.

In one embodiment, an aperture unit that can be adjusted by means of a control signal may be provided in an optical path of the light between the display unit and the one or more tiltable micro-mirror elements or within the display unit. The adjustable aperture unit is designed to adjust at least one beam position and/or at least one beam width assigned to the respective beam position for the light deflected at the reflection surfaces of the one or more tiltable micro-mirror elements in accordance with the control signal. The adjustable aperture unit can thus be used to determine, via the adjustable beam position, a location of the light striking the deflection unit or other optics such as a microlens array, for example the display unit, and thus which of the one or more micro-mirror elements the light strikes, and/or, via the adjustable beam width, a size of an area on the deflection unit on which the light strikes. This means that certain micro-mirror elements near the beam position can be excluded from being irradiated by the light, for example one or more micro-mirror elements which would only be irradiated with light to a small extent if the beam width were larger (as explained in more detail below).

This has the effect that, with the control signal and the adjustable aperture unit (which can also be referred to as an adaptive aperture), an exit aperture of the display unit can be set dynamically, i.e., variably over time, by a control signal. Even when using a display unit which, as described above, has a light-emitting display with a downstream microlens array, multiplexing can thus be implemented with the corresponding advantage of increased spatial resolution. This combines the advantages of different technological approaches.

In general (i.e., when viewed without an aperture unit), the exit aperture of the display unit is visible to the eye as a mirror image via each of the one or more micro-mirror elements. If the exit aperture is very large, any multiplexing that may be required becomes more complex, and the weight of the AR glasses increases without adding value. When designing the exit aperture (i.e., its diameter), it is therefore desirable to achieve the smallest possible diameter. If the exit aperture of the display unit is too small, it is not possible to project a virtual image for every viewing direction of the user, meaning that the virtually expandable field of view is relatively small.

The exit aperture of the display unit therefore requires a certain minimum size in order to enable a light path from the display unit to the micro-mirror element and from the micro-mirror element to the eye for all AR viewing angles, i.e., for the largest possible virtually supplementable field of view. Pixel image information is thus projected as a beam of rays with the diameter of the exit aperture of the display unit onto the deflection unit, onto the one or more micro-mirror elements (the "micro-mirror array" as a whole). A typical diameter of an exit aperture is, for example, 8 mm. A typical diameter for micro-mirror elements or their reflection surfaces is 2-4 mm. Thus, the beam of a pixel image information may fall on several adjacent micro-mirror elements simultaneously. Since each of the one or more micro-mirror elements is ideally aligned depending on the current orientation of the eye so that the central visual beam from the pupil is imaged in the center of the exit aperture of the display unit, it can happen that light from a pixel image information that falls on two adjacent micro-mirror elements simultaneously can also be seen simultaneously in the eye. However, since adjacent micro-mirror elements are aligned differently, the same pixel image information is perceived in two differently reflected directions, resulting in one or more virtual ghost images.

The adjustable aperture unit ensures that only a cropped beam of light is projected onto the different micro-mirror elements or the different micro-lenses of the micro-lens array for each pixel image information, so that as little light as possible falls on the respective (next) adjacent micro-mirror elements or micro-lenses, or only light that does not hit the pupil and is therefore not visible.

It is therefore advantageous to design the adjustable aperture unit in such a way that, for each of the one or more micro-mirror elements, only viewing directions are provided for the virtual image in which the light hitting the respective micro-mirror element covers a larger area than on other (nearest) neighboring micro-mirror elements. Extreme viewing directions, which primarily (i.e., at least predominantly) hit a neighboring micro-mirror element and only hit the micro-mirror element being viewed (at a given time) to a very small extent, for example, just grazing it, should accordingly no longer hit the exit aperture of the display unit. Accordingly, a small exit aperture of the display unit can be selected for each micro-mirror element viewed at a respective multiplexing time point, for example, within the framework of time multiplexing, in order to improve the image quality. This is achieved with the adjustable aperture unit and/or the microlens array.

This has the advantage that diffraction effects during image formation are minimized and maximum sharpness of the virtual image can be achieved. This is because a micro-mirror element that deflects only a small portion of the total beam originally emitted by the display unit into the eye acts as an aperture. In other words, it can cut off the beam if the beam is only partially reflected. It is known from optics that if the aperture is small, diffraction increases. It is therefore advantageous to position the beam on the micro-mirror element using the adjustable aperture unit in such a way that it is not or almost not cut off by the micro-mirror element.

In another embodiment, the adjustable aperture unit is designed to adjust the beam position by adjusting at least one position of at least one transparent, i.e., transparently switched by means of the control signal, partial aperture area within a total aperture area that can be switched transparent or opaque by means of the control signal. A remaining area of the total aperture area complementary to the at least one partial area is opaque, i.e., switched opaque by means of the control signal. One or more partial aperture areas can thus be switched transparent so that only these partial aperture areas are transparent to light from one or more pixel image information items assigned to the respective partial aperture area and other pixel image information items do not reach the deflection unit. As described below, the location of the transparent sub-area or sub-areas can vary over time, for example to implement a time multiplexing method. This has the advantage that crosstalk of the pixel image information, which results in the above-mentioned ghost images, for example, is avoided or at least reduced. This improves the image quality even for large fields of view and increases the immersion of the system.

The features and combinations of features described, including those in the general introduction, as well as the features and combinations of features disclosed in the figure description or the figures alone, can be used not only alone or in the combination described, but also with other features or without some of the disclosed features, without departing from the scope of the invention. Consequently, embodiments that are not explicitly shown and described in the figures but can be produced by separate combination of the individual features disclosed in the figures are also part of the invention. Therefore, embodiments and feature combinations that do not include all the features of an originally formulated independent claim are also to be considered disclosed. Furthermore, embodiments and combinations of features that deviate from the combinations of features or go beyond those described in the dependencies of the claims are also to be regarded as disclosed.

In the context of this disclosure, "across/along" can be understood as "at least substantially perpendicular/parallel," i.e., "perpendicular/parallel" or "substantially perpendicular/parallel," i.e., perpendicular/parallel except for a specified deviation. The specified deviation may, for example, be a maximum of 15°, preferably a maximum of 5°, and particularly preferably a maximum of 3°. Accordingly, in the context of this disclosure, "oppositely oriented" can be understood to mean "at least substantially oppositely oriented," i.e., "at least substantially antiparallel oriented." The restriction "essentially" can also refer to a percentage-based maximum permissible deviation, for example, a maximum of 15%, preferably a maximum of 5%, and particularly preferably a maximum of 3%.

### Detailed description

Exemplary embodiments are described in more detail below with reference to schematic drawings. Therein
Fig. 1 shows a top view of a plane of an exemplary embodiment of an eyewear display system;
Fig. 2 shows a top view of a plane of an exemplary embodiment of an eyewear display system with offset and overlapping micro-mirror units;
Fig. 3 shows an illustration of the optimization of the geometry of the micro-mirror units with regard to reduced visibility;
Fig. 4 shows a top view of a plane of an exemplary embodiment of an eyewear display system with an additional focusing unit and vision correction;
Fig. 5 shows exemplary refractive indices of liquid and transparent material as a function of wavelength;
Fig. 6 shows proportional Fresnel reflections as a function of the angle of incidence for an exemplary wavelength;
Fig. 7 shows wavelength-dependent refraction effects as a function of the angle of incidence and wavelength;
Fig. 8 shows a top view of a plane of an exemplary embodiment of an eyewear display system with concave reflection surfaces;
Fig. 9 shows a top view of a plane of another exemplary embodiment of an eyewear display system with concave reflection surfaces; and
Fig. 10 shows an illustration of the deflection of the micro-mirror units by means of a guide matrix structure;
Fig. 11 shows a front view and interior view of another exemplary embodiment of an eyewear display system; and
Fig. 12 shows a top view of a plane of an exemplary embodiment of an eyewear display system with exactly one micro-mirror element per eye.

In the figures, identical or functionally identical features are designated by the same reference numerals.

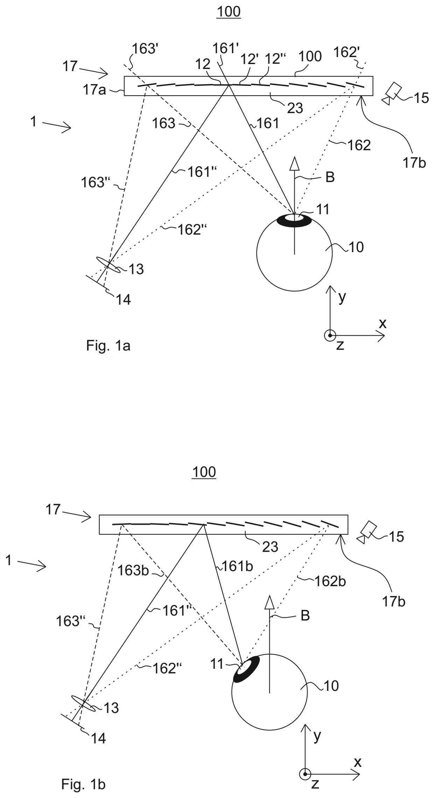

Figure 1 shows a top view of a plane of an exemplary embodiment of an eyewear display system, exemplary for one half, i.e., for one eye. For two eyes, the system can be supplemented symmetrically accordingly.

Fig. 1a shows one half of the eyeglass display system 1, for example the left half from above or the right half from below. Light 163", 161", 162" is emitted by a display unit 14 (arranged laterally here), which in this case is imaged by an optical system 13 in such a way that this light 163", 161", 162" is (partially) reflected by one or, in the shown example, more micro-mirror elements such as 12, 12', 12" of a deflection unit 17 onto the pupil 11 of the eye 10. The optics 13 may comprise one or more lenses and/or mirrors and/or other optical components such as one or more (also adaptive, i.e., controllable by a control signal) aperture units. The optics 13 may also comprise or be a microlens array with a plurality of microlens elements and/or projector optics as exemplified in the general description.

Here, the eye is oriented in a central viewing direction B (here parallel to the y-direction). If the one or more micro-mirror elements 12, 12', 12" (for example, with typical dimensions of approximately 2 mm) are designed to be at least substantially transparent to ambient light, then it is possible to view the natural environment 100 according to light rays such as 161', 162', 163', and the light rays 161', 162',163' of ambient light can be superimposed with a virtual image with light rays 161", 162", 163". The optics 13 can be designed so that the virtual image can be viewed sharply at a finite or infinite distance. The micro-mirror elements 12, 12', 12" are mounted so that they can be tilted, allowing them to be aligned in two dimensions.

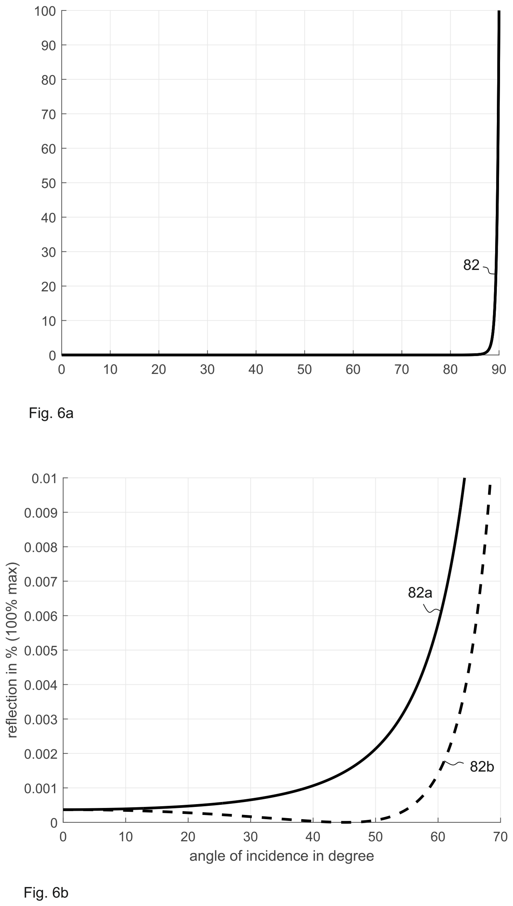

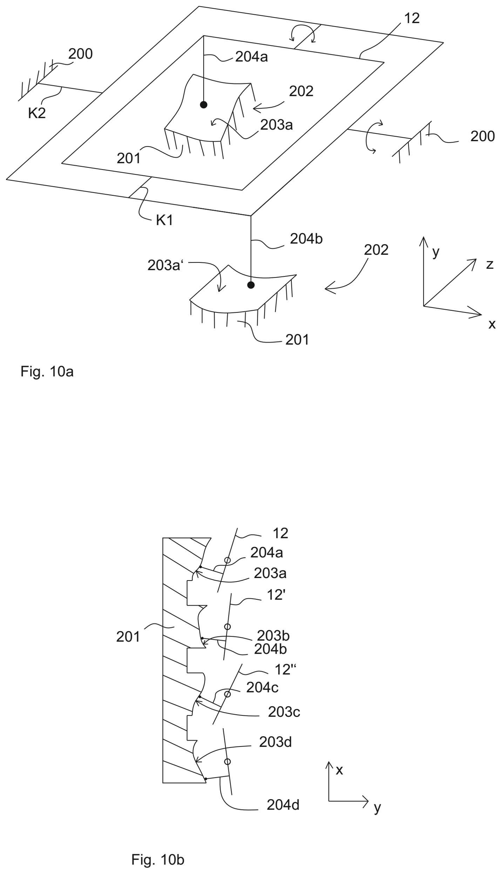

The one or more micro-mirror elements 12, 12', 12" and a support structure 200 (Fig. 10) for the micro-mirror elements 12, 12', 12", which is not shown for reasons of clarity, are arranged in a sealed housing element 17a filled with a liquid 23. The liquid 23 is selected in such a way that the refractive index of the micro-mirror element material(s) and the liquid is as identical as possible. It is known that glass components become invisible when immersed in a liquid that has an almost identical refractive index. This results in two effects. On the one hand, the Fresnel reflection that occurs at the transition from one medium to another medium with a different refractive index disappears. Second, light rays are not refracted at the material transition. However, even with very small differences, there is still the possibility of partial reflection and total internal reflection if the angles are very flat at the interface. This is shown and explained in more detail in Fig. 6.

In the present case, in conjunction with determining the orientation of the eyes 10 and thus the position of the pupils 11 by means of an eye tracking device 15, it is possible to direct the light 163", 161", 162" from the optics 13 very precisely into the pupil 11 of the eye 10. In the event of eye movement, for example, as shown in Fig. 1b, a lateral eye movement with a changed position of the pupil 11, the one or more micro-mirror elements 12, 12', 12" are aligned accordingly so that the light 163", 161", 162" from the optics 13 hits the pupil 11 precisely again. In addition to the carrier structure for the micro-mirror elements 12, 12', 12", the micro-mirror elements 12, 12', 12" are also equipped with one or more actuator elements (not shown for reasons of clarity) for adjusting the angular alignment and thus the respective reflection angles, and in this case additionally with an individual angle sensor (also not shown here) for measuring the current angular alignment.

This enables a control loop for tracking the one or more micro-mirror elements 12, 12', 12" so that the light 163", 161", 162" from the optics 13 hits the pupil 11 of the eye 10. To this end, the position of the pupil 11 is measured using the eye tracking device 15 and the target angular alignment of the micro-mirror elements 12, 12', 12" is calculated by means of a control unit and then compared with the actual position of the micro-mirror elements 12, 12', 12". The actuator element(s) then compensate for the difference between the ACTUAL and TARGET values, aiming for a sufficiently high speed so that the eye 10 can perceive the virtual image as stable even when moving. The maximum speed of the eye is known to be 1000°/s, from which a minimum processing speed can be derived.

When the angular alignment of the one or more micro-mirror elements 12, 12', 12" changes, the new orientation of the eye 10 also changes the direction of view, which now deviates from the central direction of view B. Comparing Figs. 1a and 1b, it is noticeable that light 161" in Fig. 1a is reflected as light 161 and in Fig. 1b as light 161b, whereby the lights 161b and 161 differ in their direction. As a result, the assignment of the respective virtual pixels of the virtual image to a respective physical pixel of the display unit 14 changes, and the image information emitted in the direction 161" by the display unit 14 must be adapted to the changed angular alignment or orientation.

Thus, in the event of eye movement, not only should the orientation of the one or more micro-mirror elements 12, 12', 12" be adjusted, but also the pixel light image information generated on the display unit 14. However, since the geometric arrangement from the projector to the micro-mirror is known, the laws of optics can be used to calculate what new image information must be displayed so that the human viewer has, at a predetermined location of the pupil (specified "eyebox"), the impression that the virtual image has not shifted, and a corresponding assignment rule can be stored in a control unit of the display unit 14.

The one or more micro-mirror elements 12, 12', 12" are preferably controlled in such a way that the central viewing beam, i.e., the viewing beam that starts from the center of the pupil and hits the assigned micro-mirror element in the center, is deflected, for example, along light 163b in Fig. 1b, to the center of the optics 13. Since a change in the inclination of the micro-mirror elements 12, 12', 12" changes the angle at which pixel image information from display unit 14 is seen, as explained, it may be advantageous that the micro-mirror elements 12, 12', 12" are not continuously adjusted, but rather in steps based on a threshold value that specifies how off-center the light 163b may strike the pupil 11 of the eye 10. It is advantageous that the eye makes micro-movements, which as a result do not need to be compensated for. It is also advantageous that the micro-mirror elements 12, 12', 12" are embedded in the liquid 23, which has a damping effect and suppresses vibrations (i.e., small, rapid angular movements).

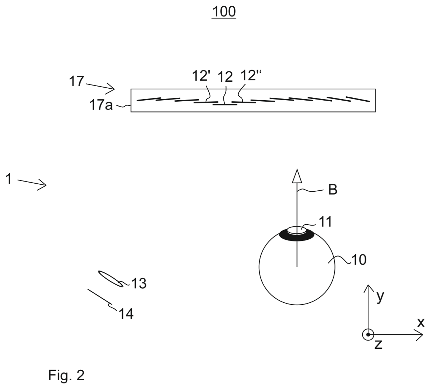

The one or more micro-mirror elements 12, 12', 12" are drawn in a plane in Fig. 1. However, as shown in Fig. 2, they can also be arranged on a one- or two-dimensional curved surface. The micro-mirror elements 12, 12', 12" are arranged offset from one another in the central viewing direction running transversely to a main extension plane of the deflection unit 17 (here the x-z plane). For example two, several or all of the respective adjacent micro-mirror elements 12, 12', 12" are arranged offset relative to each other. This is advantageous because eyeglass lenses typically have curved surfaces, known as base curves, and thus the eyeglass display system 1 can be designed to be more similar to conventional eyeglasses. Furthermore, this also allows more of the micro-mirror elements 12, 12', 12" to be formed with mutual overlap and/or the extent of overlap of respective adjacent micro-mirror elements 12, 12', 12" to be increased.

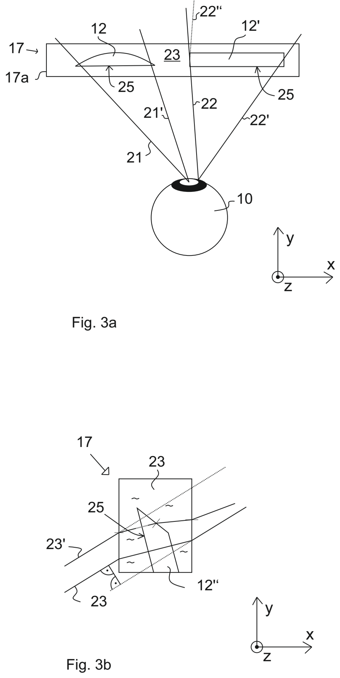

Fig. 3a shows different geometries of the one or more micro-mirror elements with their consequences for undesirable refraction and reflection effects. The liquid 23, which has an index of refraction that is almost identical to that of the material of the micro-mirror elements 12, 12', eliminates the Fresnel reflection that occurs at the transition from one medium to another medium with a different index of refraction, and the light rays 21, 21', 22, 22' are not refracted.

However, even with very small differences, there is still the possibility of partial reflection and total internal reflection if the light rays strike the respective interfaces at a very flat angle. For example, light ray 22" is shown as such a partially reflected light ray. Accordingly, Fig. 3a shows two micro-mirror elements 12 and 12' with different geometries. Both micro-mirror elements 12 and 12' realize a semi-transparent reflection surface 25, e.g., by applying a thin metal coating to the micro-mirror elements 12, 12'. The micro-mirror elements 12, 12' themselves are made, for example, of a plastic or glass with a first refractive index that matches the second refractive index of the surrounding liquid 23 as closely as possible.

The difference between the two exemplary micro-mirror elements 12, 12' in Fig. 3a lies in their geometric design, whereby micro-mirror element 12' creates boundary surfaces at which the visual rays of the human eye 10 corresponding to the light beam 22 strike the optical boundary surface at a flat angle. In this case, depending on the actual angle, total reflection or partial reflection may occur. These reflections cloud the transparency of the deflection unit 17, as the partial reflections superimpose ghost images. It is therefore advantageous for the mechanical structures of the micro-mirror element to be designed in such a way that the visual rays pass through the boundary surfaces with a refractive index transition as orthogonally as possible. Thus, the geometry of micro-mirror elements 12 with a rounded rear side is preferable to the rectangular geometry of micro-mirror elements 12'.

Fig. 3b shows another geometry of a micro-mirror element 12". Here, the micro-mirror element 12" has a trapezoidal geometry in the shown cross-section, with the long side of the trapezoid corresponding to the reflection surface 25. The light beam 23 passing through the two parallel base sides of the trapezoid runs parallel before and after the micro-mirror element 12" and before and after the deflection unit. However, the light beam 23' passing only through the long base side of the trapezoid and one of the legs does not, since the boundary surface at the leg is passed at an angle too flat. The trapezoidal geometry of micro-mirror elements 12" is therefore preferable to the rectangular geometry of micro-mirror elements 12', but not to the geometry of micro-mirror elements 12 with a rounded rear side.

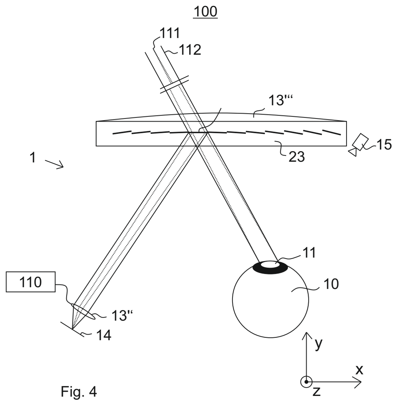

Fig. 4 shows a top view of a plane of an exemplary embodiment of an eyewear display system with an additional focusing unit and, in this case, also vision correction. The additional focusing unit 13" as adaptive optics is adjusted in its focus by a control unit 110. For example, the focus of the virtual image can be set either to infinity (beam path/light beam 112) or to a finite distance (beam path/light beam 111). This solves the vergence-accommodation problem. If the focus can be adjusted faster than the image refresh rate, different planes of focus can even be set within a virtual image.

With an additional lens element 13" between the deflection unit 17 and the environment 100, visual acuity correction can be integrated here without much effort. Its properties must then be taken into account by the control unit 110.

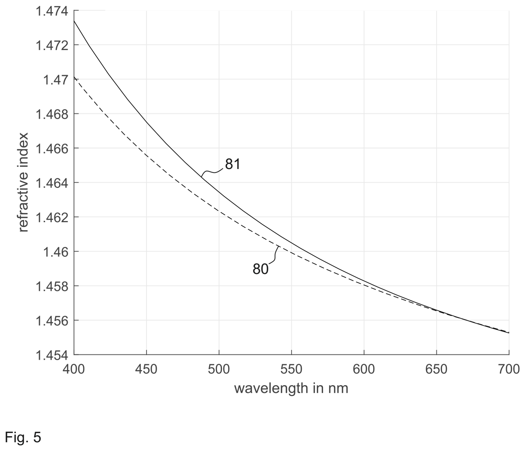

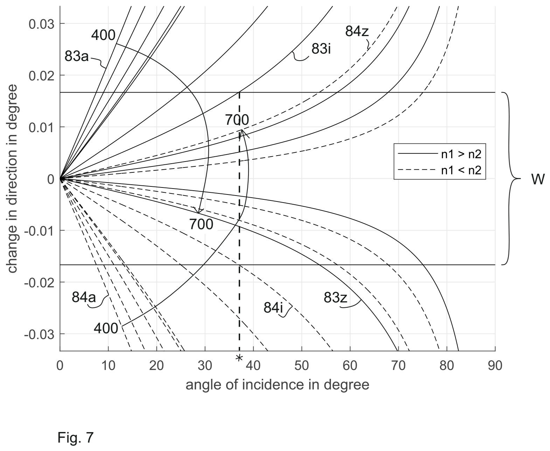

Figure 5 shows examples of refractive indices of a liquid, in this case oil, and a transparent material, in this case quartz glass, as a function of wavelengths in nm from 400 nm to 700 nm at an example temperature. Curve 80 corresponds to the first refractive index of the liquid 23, curve 81 to the second refractive index of the material of the one or more micro-mirror elements 12, 12', 12". It should be noted that the maximum difference between the first and second refractive indices is reached here at 400 nm and does not exceed the relatively small amount of 0.004. It is particularly advantageous if the two curves 80, 81 have an intersection point in the green wavelength range (520 nm-565 nm), as it has been found that artifacts in the green wavelength range are perceived by humans with higher resolution than in the red and blue ranges. For these refractive indices, the values illustrated in Figs. 6 and 7 for Fresnel reflections and refraction effects result, which lead to largely invisible material transitions and thus largely invisible micro-mirror elements 12, 12', 12" and a largely invisible carrier structure or largely invisible housing element 17a. It should also be noted at this point that reflections can also occur on the inner side 17b (Fig. 1) of the housing element 17a facing a user and display unit 14 as a boundary layer. These cause interference due to the offset of the inner side 17b in the y-direction relative to the micro-mirror elements 12, 12', 12". These interfering reflections can be reduced or eliminated with an anti-reflective coating such as that commonly used on conventional eyeglasses.

In Fig. 6a, curve 82 shows the Fresnel reflection as a percentage of the total intensity over the angle of incidence in degrees for the combination of the two refractive indices from Fig. 4 for a wavelength of 450 nm. The difference in refractive indices here is around 0.002. There is clearly an exponential increase in the proportion of reflected intensity due to this effect. The reflection is close to zero up to an angle of incidence of over 80° and rises to 100% within a few degrees at 90°, i.e., when light falls flat, almost grazing the boundary layer (the angle of incidence is measured relative to a perpendicular to the boundary surface).

Fig. 6b shows that the reflected light fraction is below 0.01% up to approx. 70°, meaning that Fresnel reflection plays no role below this angle of incidence. Fig. 6b shows the Fresnel reflection as a percentage of the total intensity ("reflection in % (100% max)") over the angle of incidence in degrees ("angle of incidence in degree") for the combination of the two refractive indices from Fig. 4 for the wavelength 450 nm from 0° to 70°. Curve 82a shows the curve for s-polarized light, curve 82b for p-polarized light.

In addition to the Fresnel reflections from Fig. 6, refraction effects must also be taken into account, which likewise depend on the angle of incidence and wavelength. Accordingly, Fig. 7 shows the wavelength-dependent refraction effect, a deflection in degrees ("change in direction in degree") as a function of the angle of incidence ("angle of incidence in degree") and the wavelength from 400 nm to 700 nm. Temperature and refractive indices correspond again to the temperature and refractive indices of Figs. 4 and 5. The solid curves 83a..83i..83z describe the deflection when light enters from the optically denser medium into the optically thinner medium for wavelengths from 400 nm (curve 83a) to 700 nm (curve 83z). The dashed curves 84a..84i..84z describe the deflection when light strikes the optically denser medium from the optically thinner medium for wavelengths from 400 nm (curve 84a) to 700 nm (curve 84z).

Distractions in a core area W around 0 degrees are not perceived by the user due to the angular resolution of the human eye, which is limited to around 1/60° = 0.0167, and are therefore not critical. Thus, for example, curves 83i, 84i, and show that angles of incidence of up to approximately 38° for wavelengths above 550 nm cannot be perceived by the user and are therefore not critical. From such representations, an optimized geometry for the one or more micro-mirror elements 12, 12', 12" can be derived depending on the overall geometry of the eyeglass display system 1.

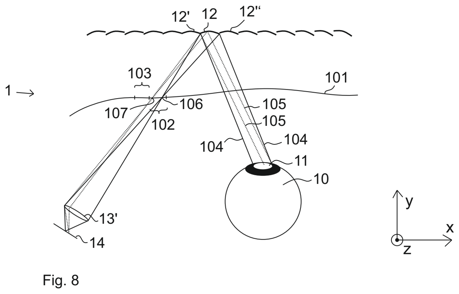

Fig. 8 shows a top view of a plane of an exemplary embodiment of an eyewear display system with concave reflection surfaces. The principle shown allows a multiplexing method to be circumvented.

This approach is particularly light-efficient, as all of the light 163", 161", 162" is directed into the pupil 10 of the eye 11. For this purpose, the optics 13' are designed so that the light from the display unit 14 is projected onto an intermediate image 101. However, the intermediate image 101 does not have to be sharply focused. For example, it may be advantageous to compensate at this point for imaging errors that occur due to subsequent reflection on a curved micro-mirror element 12, 12', 12". The intermediate image 101 is selected such that the intermediate image 101 is imaged by a curved micro-mirror element 12, 12', 12" into the pupil 11 of the eye 10. Due to the geometric constellation of the pupil position relative to the micro-mirror elements 12, 12', 12" and the diameters of the pupil 11 and micro-mirror elements 12, 12', 12" results in a viewing area 102 and 103, respectively, which is spanned by a micro-mirror element 12 and 12', respectively. The intermediate image 101 is positioned so that adjacent viewing areas 102 and 103 do not overlap. Thus, the light 163", 161", 162" of a physical pixel of the display unit 14 is only imaged onto one micro-mirror element 12, 12', 12" and no further multiplexing process is necessary.

In the embodiment shown in Fig. 8, each light beam 104, 105 has its own intermediate focus 106, 107, which is mapped to its own physical pixel on the display unit 14. Because such light beams 105 not only strike one micro-mirror element 12, but also another micro-mirror element 12', and this is again mapped onto a separate physical pixel on the display unit 14, redundant physical pixels are necessary, i.e., more physical pixels than virtual pixels represented in the virtual image.

In one variant, the intermediate image 101 can also be designed so that adjacent viewing areas 102, 103 overlap. The corresponding micro-mirror elements 12, 12' are then designed so that the same intermediate focus 107 is used for the same viewing angles that strike the pupil 11, and thus only one physical pixel per viewing direction is necessary. This design is more optically demanding because the micro-mirror elements 12, 12', 12" not only have to produce a sharp image, but also have to control distortion in such a way that adjacent and differently tilted micro-mirror elements 12, 12', 12ʺʺ must reproduce a common intermediate image 101. In designing the optics 13', it can be exploited that maximum sharpness must only be achieved for a central area, the so-called "foveated area," i.e., when the eye 10 is aligned precisely with the respective micro-mirror element 12, 12', 12"'. When the eye 10 turns away, human imaging performance drops quickly and sharply, so that image errors are usually not perceived in this case.

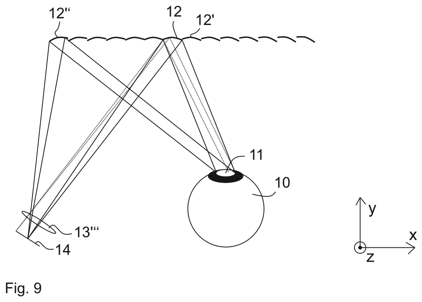

Fig. 9 shows a top view of a plane of another exemplary embodiment of an eyewear display system with concave reflection surfaces, which is similar to that shown in Fig. 8, but optionally does not require the optics 13'.

The one or more micro-mirror elements 12, 12', 12" are designed to focus directly on the display unit 14. Additional optical elements 13"" can be inserted to improve the image quality. Thus, all micro-mirror elements 12, 12', 12ʺʺ simultaneously image the display unit 14. In order to clearly image pixel information in a viewing direction, a multiplexing method must therefore be used. A multiplexing method based on a switchable, adaptable aperture unit is suitable for this purpose, so that unwanted micro-mirror elements 12, 12', 12" are hidden at any given time and the aperture unit is only transparent for desired micro-mirror elements. Such a switchable, adaptable aperture unit can be implemented, for example, by means of a liquid crystal shutter.

In different embodiments, the focus of the one or more micro-mirror elements 12, 12', 12" can thus be located at different distances. Figure 8 shows an example in which the focus 101 is located in front of the display unit 14. In Figure 9, the focus is located on the display. The focus can also be located behind the display unit 14 at infinity. The focal plane can therefore be freely selected in front of, on, or behind the display unit 14. If pixel information is simultaneously mapped onto several micro-mirror elements 12, 12', 12‴, a multiplexing method such as that described in the last paragraph is necessary in order to clearly display pixel information in one image direction.

Fig. 10 shows an illustration of the deflection of the one or more micro-mirror units by means of a guide matrix structure.

Figure 10a shows an example of a micro-mirror unit 12 which is arranged on a carrier structure 200 so that it can be tilted about two tilt axes K1, K2. A two-dimensional guide matrix structure 202 with respective guide surfaces 203a, 203a', 203b, 203c, 203d is formed on a common actuator element 201 (Fig. 10b). The respective micro-mirror units 12, 12', 12" probe the guide matrix structure 202 in the form of the associated guide surfaces 203a, 203a', 203b, 203c, 203d with respective sensors 204a, 204a', 204b, 204c, 204d, one sensor per tilt axis K1, K2, so that when the actuator element 201 is displaced, the respective micro-mirror units 12, 12', 12" can be tilted in a non-linear manner from the displacement of the actuator element 201 in a manner that differs from one another according to the spatial shape of the guide surfaces 203a, 203a', 203b, 203c, 203d in different ways from each other in a nonlinear manner.

Fig. 10b shows this in a sectional view for one dimension of the tilting. For example, when the actuator element 201 is displaced in the negative x-direction, two micro-mirror units 12, 12" are tilted counterclockwise, while another micro-mirror unit 12' is tilted clockwise.

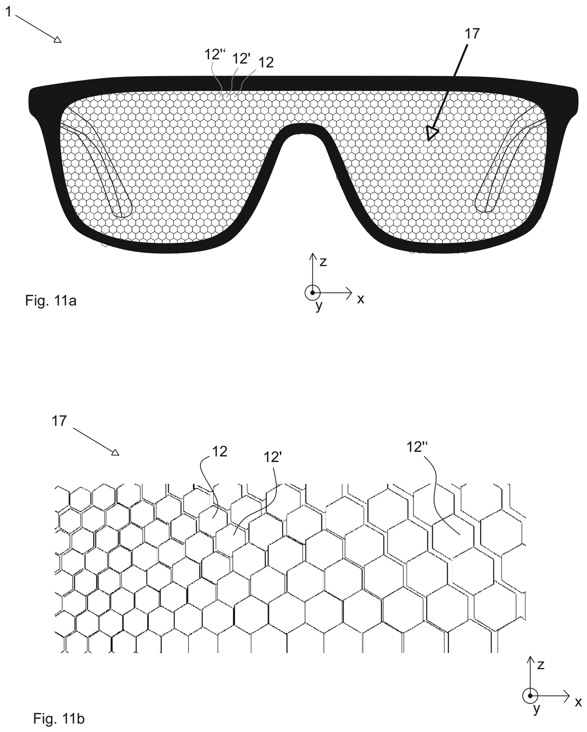

Fig. 11 shows another example embodiment of an eyewear display system. As can be seen from Fig. 11a, the eyewear display system 1 in this example has a deflection unit 17 with a plurality of micro-mirror units 12, 12', 12" arranged over a large area in a field of view corresponding to that of conventional glasses. Fig. 11b shows an interior view of the deflection unit 17 with the many micro-mirror units 12, 12', 12". Adjacent micro-mirror units 12, 12' are shown here as an example, some of which overlap. In the example shown, the one or more micro-mirror units 12, 12', 12" are arranged offset in the y-direction and are also of different sizes. Micro-mirror unit 12" has a larger reflection surface than micro-mirror unit 12', and micro-mirror unit 12' has a larger reflection surface than micro-mirror unit 12.

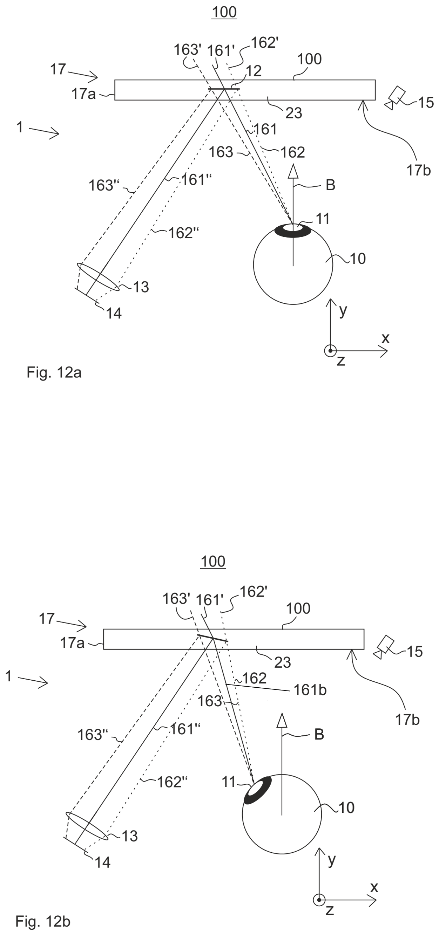

Corresponding to Fig. 1, figure 12 shows a top view of a plane of an exemplary embodiment of an eyewear display system, exemplary for one half, i.e., for one eye. For two eyes, the system can be supplemented symmetrically accordingly. In the present embodiment, the deflection unit 17 has only one micro-mirror element 12 (per eye, thus two micro-mirror elements in total). The components of this embodiment may correspond to the components of the embodiment of Fig. 1 or any other figures if not described differently.

Similar to Fig. 1a, Fig. 12a shows one half of the eyeglass display system 1, for example the left half from above or the right half from below. Light 163", 161", 162" is emitted by a display unit 14 (arranged laterally here), which in this case is imaged by an optical system 13 in such a way that this light 163", 161", 162" is (partially) reflected by, in the shown example, exactly one micro-mirror elements 12 of the deflection unit 17 onto the pupil 11 of the eye 10.

As in Fig. 1a, the eye is oriented in a central viewing direction B (here parallel to the y-direction). Again, if the micro-mirror element 12 is designed to be at least substantially transparent to ambient light, then it is possible to view the natural environment 100 according to light rays such as 161', 162', 163', and the light rays 161', 162',163' of ambient light can be superimposed with a virtual image with light rays 161", 162", 163". The micro-mirror element 12 is mounted so that it can be tilted, allowing it to be aligned in two dimensions.

Corresponding to the embodiment of Figs. 1a and 1b, when the orientation of the eye 10 changes the direction of view, which deviates from the central direction of view B, the angular alignment of the micro-mirror element 12 changes too. Comparing Figs. 12a and 12b, it is noticeable that light 161" in Fig. 12a is reflected as light 161 and in Fig. 12b as light 161b, whereby the lights 161b and 161 differ in their direction. As a result, the assignment of the respective virtual pixels of the virtual image to a respective physical pixel of the display unit 14 changes, and the image information emitted in the direction 161" by the display unit 14 must be adapted to the changed angular alignment or orientation.

## Claims

1. Eyewear display system (1) for displaying a virtual image in a user's field of view, comprising
- a display unit (14) for emitting a light (163", 161", 162") as computer-generated image information in an emission direction;
- a deflection unit (17) for deflecting the light (163", 161", 162") emitted by the display unit (14) as computer-generated image information 162") into an eye (10) of the user, with at least one micro-mirror elements (12, 12', 12") which can each be tilted in a carrier structure (200) and which each have at least one reflection surface (25) for deflecting the light (163", 161", 162") emitted by the display unit (14) as computer-generated image information;
wherein
the at least one micro-mirror element (12, 12', 12") and the support structure (200) are arranged in a sealed housing element (17a) of the deflection unit (17) which sealed housing element (17a) is filled with a liquid (23); and
- the at least one micro-mirror element (12, 12', 12") or the support structure (200) are made of or with a respective transparent material having a first refractive index;
- the liquid (23) has a second refractive index that is adapted to the first refractive index in the sense of the smallest possible deviation; wherein
- the deviation between the first refractive index and the second refractive index is smaller than a maximum limit value in the green wavelength range.

2. Eyewear display system (1) according to the preceding claim,
**characterized in that**
- the at least one micro-mirror element (12, 12', 12") and/or the support structure (200) are each at least substantially transparent to an ambient light from the user's field of view, in particular invisible to the user in at least one wavelength range and/or at least one angular range of the ambient light, and are made of or with a respective transparent material; and
- the liquid (23) is also at least substantially transparent to the ambient, in particular with the second refractive index being equal to the first refractive index for at least one wavelength of a green wavelength range.

3. Eyewear display system (1) according to one of the preceding claims, **characterized in that**
the at least one micro-mirror element (12, 12', 12") is mechanically coupled to an actuator element (201).

4. Eyewear display system (1) according to one of the preceding claims, characterized in thatthe deflection unit (17) comprises exactly one micro-mirror element (12, 12', 12") per eye.

5. Eyewear display system (1) according to one of the preceding claims, **characterized in that**
the respective at least one micro-mirror element (12, 12', 12") has a coating on its reflection surface (25) whose reflective properties are adapted to an emission spectrum of the display unit.

6. Eyewear display system (1) according to the preceding claim,
**characterized in that**
the reflective properties of the coating are adapted to maxima in the emission spectrum.

7. Eyewear display system (1) according to one of the preceding claims, **characterized in that**
the support structure (200) and/or the at least one micro-mirror elements (12, 12', 12") are shaped in such a way that the ambient light from the user's field of view passes through interfaces between the transparent material and the liquid (23) and/or between the liquid (23) and the transparent material at least predominantly at small angles, in particular at least predominantly at angles of less than 45°.

8. Eyewear display system (1) according to one of the preceding claims, characterized in thatthe deviation between the first refractive index and the second refractive index is smaller in the green wavelength range than in one other subrange, in particular all other subranges, of the visible spectrum.

9. Eyewear display system (1) according to the preceding claim,
**characterized in that**
a maximum limit value for the deviation in the green wavelength range is 0.005, in particular 0.002.

10. Eyewear display system (1) according to one of the preceding claims, **characterized in that**
the support structure (200) and/or the common actuator element (201) extend along a one- or two-dimensionally curved surface.

11. Eyewear display system (1) according to one of the preceding claims, **characterized in that**
the housing element (17a) has an anti-reflective coating on a side (17b) facing the display unit (14), in particular an anti-reflective coating with locally varying anti-reflective properties and/or an anti-reflective coating matched to polarized light from the display unit.

12. Eyewear display system (1) according to one of the preceding claims, **characterized by**
- an eye-tracking device (15) for determining an orientation of the user's eye (10), and
- a control unit for controlling the deflection unit (17) depending on a result of determining the orientation of the eye (10).

13. Eyewear display system (1) according to the preceding claim,
**characterized in that**
the control unit is also designed to control the display unit (14) in accordance with an assignment rule stored in the control unit, wherein the assignment rule specifies an assignment of the respective virtual pixels of the virtual image to a respective physical pixel of the display unit (14) which changes depending on the orientation of the eye (10).

14. Eyewear display system (1) according to one of the two preceding claims, **characterized in that**
- in a standard operating mode, the one micro-mirror element (12) or at least almost all micro-mirror elements (12, 12', 12") are aligned with the angular alignment of the eyeglass display system (1) in such a way that only light from the display unit (14) is directed into the user's eye (10) by the respective micro-mirror element (12, 12', 12"), and/or
- in a power-saving operating mode of the eyeglass display system (1), the one or more micro-mirror elements (12, 12', 12") that are not irradiated by the display unit (14) are brought into a predetermined rest alignment, in which rest alignment essentially only light from the display unit (14) is directed into the eye (10) of the user when the eye (10) is in its rest position, in particular when the actuator element (201) is deactivated.
